# EUROPÄISCHE PATENTANMELDUNG

(11) **EP 2 546 029 A2**
(43) Veröffentlichungstag der Anmeldung: **16.01.2013**
(21) Anmeldenummer: 12004336.9
(22) Anmeldetag: 06.06.2012
(51) Int. Cl.: B25J 9/16

(54) **Steuerung eines Roboter**

(30) Priorität: 13.07.2011 DE 102011107169
(71) Anmelder: KUKA Roboter GmbH, 86165 Augsburg (DE)
(72) Erfinder: Haag, Michael, 76227 Karlsruhe (DE); Munz, Heinrich, 88368 Bergatreute (DE); Jacob, Dirk, 87616 Marktobersdorf (DE); Klüger, Hans-Peter, 86391 Stadtbergen (DE)
(74) Vertreter: Tostmann, Holger Carl

(57) **Zusammenfassung**

Eine erfindungsgemäße Steuerung für wenigstens einen Roboter weist eine, insbesondere symmetrische, Multikern-Architektur mit einer ersten Virtuellen Maschine (V1) mit wenigstens einem Rechenkern (C3) auf, die zum Steuern wenigstens einer Prozessapplikation (P) dieses Roboters vorgesehen ist.

## Beschreibung

Die vorliegende Erfindung betrifft eine Steuerung für einen Roboter mit einer Multikern-Architektur, die Virtuelle Maschinen aufweist, sowie ein Verfahren zum Steuern eines Roboter mit einer solchen Steuerung.

Nach betriebsinterner Praxis werden Roboter durch Bewegungssteuerungen gesteuert, während Prozessapplikationen, beispielsweise Schweißzangen, eigene, hiervon separate Prozesssteuerungen aufweisen. Diese getrennten Steuerungen kommunizieren über Feldbusse. Beispielsweise meldet die Bewegungssteuerung der Prozesssteuerung, dass der Roboter einen Schweißpunkt angefahren hat, woraufhin diese die Schweißzange schließt und mit Schweißstrom beaufschlagt. Nach Beendigung des Schweißvorganges meldet die Prozesssteuerung dies der Bewegungssteuerung, die daraufhin den nächsten Schweißpunkt anfährt.

Nachteilig variiert dabei die Zeit der Informationsübertragung. Diese kann zwischen einem Minimum, welches durch die Übertragungsdauer des Feldbusses vorgegeben ist, und einem Maximum schwanken, das sich durch Addition der Zykluszeiten der einen Steuerung, des Feldbusses und der anderen Steuerung ergibt. Diese Variation, der sogenannte Jitter, beeinträchtigt die Wiederholgenauigkeit von Roboterprozessen.

Aufgabe der vorliegenden Erfindung ist es, eine Robotersteuerung zu verbessern.

Diese Aufgabe wird durch eine Steuerung mit den Merkmalen des Anspruchs 1 bzw. ein Verfahren mit den Merkmalen des Anspruchs 8 gelöst. Die Unteransprüche betreffen vorteilhafte Weiterbildungen.

Eine erfindungsgemäße Steuerung ist zum Steuern eines Roboters oder einer Anordnung von mehreren Robotern vorgesehen. Zur kompakteren Darstellung wird auch ein Regeln, d.h. eine Vorgabe von Steuergrößen unter Berücksichtigung von rückgeführten Ist-Werten, verallgemeinernd als Steuern bezeichnet.

Die Steuerung weist eine Multikern-Architektur mit wenigstens zwei, insbesondere wenigstens drei, vorzugsweise vier, sechs oder mehr, bevorzugt doppelt-ganzzahligen, Rechenkernen auf. In einer bevorzugten Ausführung ist die Multikern-Architektur durch einen Mikroprozessor auf einem Chip mit mehreren Rechenkernen ausgebildet, wobei unter einem Rechenkern vorliegend insbesondere ein, wenigstens im Wesentlichen, vollständiger Hauptprozessor ("Central Processing Unit" CPU) verstanden wird, der eine eigene arithmetisch-logische Einheit, ein eigenes Register, einen eigenen Befehlsdecoder und/oder eine eigene Fließkomma-Einheit ("Floating Point Unit") aufweist. Gleichermaßen kann eine Multikern-Architektur im Sinne der vorliegenden Erfindung auch durch mehrfädige Prozessorkerne ("Multi-Threaded-CPUs") mit mehreren Programmzählern und Registersätzen ausgebildet sein, die als mehrere Kerne agieren. Auch eine Kombination hiervon ist möglich, beispielsweise ein Doppelkernprozessor mit zwei Threads pro Kern wie etwa der IBM Power5-Prozessor, oder ein Achtkern-Prozessor mit vier Threads pro Kern wie beispielsweise der Sun UltraSPARC T1-Prozessor.

Durch die Multikern-Architektur werden erfindungsgemäß wenigstens eine, vorzugsweise zwei oder mehr Virtuelle Maschinen dargestellt. Unter einer Virtuellen Maschine im Sinne der vorliegenden Erfindung wird insbesondere eine, vorzugsweise software- bzw. programmtechnisch implementierte, Instanz bzw. Rechnerumgebung ("computing enviroment") verstanden, die wie ein, vorzugsweise eigenständiger, physikalischer Computer agiert, so dass auf demselben physikalischen Computer mehrere Virtuelle Maschinen gleichzeitig laufen können. Eine Virtuelle Maschine kann insbesondere ein eigenes Betriebssystem und/oder eine eigene Laufzeitumgebung aufweisen oder sein, unter dem bzw. in der Programme ausgeführt werden können. Innerhalb solcher Virtuellen Maschinen können insbesondere Laufzeitumgebungen vorgesehen sein, die ihrerseits als Virtuelle Maschinen agieren, etwa eine Java Virtual Machine oder KUKA.PLC ProConOs der Anmelderin.

Eine Prozesssteuerung, die einen, mehrere oder alle Prozessapplikationen eines Roboters oder mehrerer Roboter einer Roboteranordnung steuert, wird erfindungsgemäß durch eine erste Virtuelle Maschine implementiert, die einen oder mehrere Rechenkerne der Multikern-Architektur aufweist.

In einer bevorzugten Ausführung wird eine Bewegungssteuerung, die einen, mehrere oder alle Antriebe dieses Roboters bzw. dieser Roboteranordnung steuert, durch eine zweite Virtuelle Maschine implementiert, die einen oder mehrere weitere Rechenkerne der Multikern-Architektur aufweist.

Somit wird die Prozesssteuerung als Virtuelle Maschine auf wenigstens einem eigenen Rechenkern einer Multikern-Architektur direkt in die Robotersteuerung integriert, in der die Bewegungssteuerung als andere Virtuelle Maschine der Multikern-Architektur implementiert ist. Damit kann vorteilhafterweise der einleitend erläuterte Jitter reduziert oder vermieden werden, insbesondere, wenn in einer bevorzugten Ausführung diese beiden Virtuellen Maschinen synchronisiert sind. Zusätzlich oder alternativ können Hardware, Bauraum, Betriebsenergie, Abwärme und/oder Verkabelungsaufwand reduziert und/oder Ressourcen wie insbesondere Ein- und/oder Ausgabeeinrichtungen, Speichereinrichtungen, Kommunikationsnetzwerke, Schnittstellen und dergleichen, gemeinsam genutzt werden. Zusätzlich oder alternativ kann eine erfindungsgemäße Implementierung der Prozesssteuerung als weitere Virtuelle Maschine neben der Bewegungssteuerung eine gemeinsame, prozessorientierte Roboterprogrammierung, eine gemeinsame Benutzer- und/oder Rechteverwaltung, Diagnose und/oder Protokollierung für Bewegungs- und Prozesssteuerung, und/oder eine integrative Implementierung einer Sicherheitsüberwachung von Roboterbewegung und Prozessapplikation ermöglichen und/oder die Verfügbarkeit erhöhen. Insbesondere, wenn in einer bevorzugten Ausführung die beiden Virtuellen Maschinen einen gemeinsamen Speicher aufweisen, kann eine Archivierung und/oder eine Online-Qualitätsüberwachung verbessert werden, da hierfür erforderliche Daten an einem Ort zur Verfügung und somit zeitgleich zur Verfügung stehen.

Vorteilhafterweise kann so vom Roboterhersteller ein Container mit definierten Schnittstellen zur Verfügung gestellt werden, in den der Prozesshersteller seine Prozesssteuerung auf einfache Weise integrieren kann. Dies kann insbesondere Modifikationen einer Prozesssteuerung vereinfachen. Dabei ist vorzugsweise das Risiko, dass eine langsame oder fehlerhafte Prozesssteuerung die Bewegungssteuerung behindert oder sabotiert, reduziert. Vorteilhafterweise ist auch ein Neustart der Prozesssteuerung ohne Neustart der Bewegungssteuerung möglich. Vorteilhafterweise können auf verschiedenen Virtuellen Maschinen unterschiedliche Laufzeitumgebungen bzw. Betriebssysteme wie zum Beispiel VxWorks (SMP), Windows CE bzw. VxWin, QNX, On Time RTOS32 oder EUROS realisiert werden. Entsprechend wird unter einer Virtuellen Maschine, die für eine Task, insbesondere eine Prozesssteuerung, vorgesehen ist, insbesondere eine Virtuelle Maschine verstanden, die dazu eingerichtet ist, diese Task auszuführen, gegebenenfalls, nachdem diese in einem Container implementiert wurde.

Insbesondere, wenn die Multikern-Architektur einen weiteren Rechenkern aufweist, kann eine dritte Virtuelle Maschine zur Benutzerkommunikation, Datenverarbeitung und/oder Datenverwaltung vorgesehen sein. Während die erste und/oder zweite Virtuelle Maschine zur Prozesss- bzw. Bewegungsteuerung vorzugsweise echtzeitfähige Betriebssysteme ("Real-Time Operating System" RTOS) aufweisen, ist in einer bevorzugten Ausführung die dritte Virtuelle Maschine nicht echtzeitfähig (N-RTOS), sondern kann beispielsweise ein Windows-Betriebssystem ausführen. Unter einer Benutzerkommunikation wird vorliegend insbesondere eine Dateneingabe durch einen Benutzer, beispielsweise mittels Tastatur oder graphikbasiert, insbesondere durch Maus oder Touchscreen, und/oder eine Datenausgabe, insbesondere auf einem Bildschirm, verstanden, unter einer Datenverwaltung insbesondere ein Ordnen und/oder Speichern von Daten, unter einer Datenverarbeitung eine logische und/oder arithmetische Verknüpfung von Daten. Entsprechend kann die dritte Virtuelle Maschine insbesondere zur Programmierung, Ausführung und oder Modifikation der Bewegungs- und/oder Prozesssteuerung verwendet werden.

In einer bevorzugten Ausführung wird jeder Rechenkern nur von einer Virtuellen Maschine genutzt. In einer alternativen Ausführung können zwei oder mehr Virtuelle Maschinen auf einen oder mehrere Rechenkerne gemeinsam zugreifen. In einer bevorzugten Weiterbildung weist die zweite Virtuelle Maschine zwei Rechenkerne auf, die erste Virtuelle Maschine einen. In einer bevorzugten Ausführung sind wenigstens zwei, vorzugsweise alle Rechenkerne identisch, d.h. die Mehrkern-Architektur symmetrisch, so dass die Virtuellen Maschinen wahlweise auf die verschiedenen Kerne verteilt werden können. Gleichermaßen ist jedoch auch eine asymmetrische Mehrkern-Architektur möglich, die den Vorteil bietet, die Kerne und Virtuelle Maschinen spezifischer aneinander anpassen zu können.

Vorzugsweise weisen zwei oder mehr, insbesondere alle Virtuellen Maschinen der Mehrkern-Architektur jeweils einen gemeinsamen Speicher auf. Dieser gemeinsame Speicher ("Shared Memory" SM) kann jeweils den kompletten physikalischen Speicher der Mehrkern-Architektur oder auch nur einen Teilbereich hiervon umfassen. Dies ermöglicht einen schnellen, zuverlässigen Datenaustausch. Dabei kann ein gemeinsamer Speicher als Teilbereich eines physikalischen Speichers programmtechnisch vorgegeben werden. Eine Virtuelle Maschine kann in einer bevorzugten Weiterbildung auf den gemeinsamen Speicher zweier weiterer Virtueller Maschinen oder einen Teil hiervon zugreifen. So kann beispielsweise eine absolute Systemuhrzeit allen Virtuellen Maschinen zur Verfügung gestellt werden. Gleichermaßen kann auch vorgesehen sein, dass auf einen gemeinsamen Speicher nicht alle, insbesondere nur zwei Virtuelle Maschinen zugreifen können, insbesondere, um eine Datenkorruption oder Beeinträchtigung der Echtzeitfähigkeit zu verhindern.

In einer bevorzugten Ausführung kann die Bewegungssteuerung Abbilder eines Busses, mit dem sie mit den Antrieben und/oder Sensoren kommuniziert, in dem gemeinsamen Speicher ablegen, so dass die Prozesssteuerung hierauf, insbesondere auf Motor- und/oder Gelenkpositionen bzw. die Werte anderer Sensoren, etwa Abstandssensoren, vorzugsweise nur lesend, zugreifen kann. Die Prozesssteuerung kann insbesondere Flags in dem gemeinsamen Speicher setzen und so die Bewegungssteuerung über den Prozessstatus informieren und vorzugsweise eine Abarbeitung weiterer Bewegungsschritte kommandieren. Allgemein können eine oder mehrere Virtuelle Maschinen den Zugriff auf gemeinsame Speicher, insbesondere über Pointer und/oder Spin Locks, steuern. Zusätzlich oder alternativ kann ein Datenbereich eines virtuellen I/O-Treibers in einen gemeinsamen Speicher eingeblendet werden.

Zusätzlich oder alternativ zu dieser Kommunikation über gemeinsame Speicher kann ein Bus zur Kommunikation einer Virtuellen Maschine mit einer oder mehreren weiteren Virtuellen Maschinen vorgesehen sein. Unter einem Bus wird vorliegend insbesondere verallgemeinernd ein physikalisches oder virtuelles Netzwerk und/oder Netzwerkprotokoll verstanden, insbesondere ein Feldbus und vorzugsweise ein echtzeitfähiger Bus wie insbesondere EtherCAT.

Über diesen oder einen weiteren Bus kann die Virtuelle Maschine mit Roboterantrieben kommunizieren. Zusätzlich oder alternativ kann die Virtuelle Maschine über diesen oder einen weiteren Bus mit Prozessapplikationsperipherien, Ein- und/oder Ausgabeeinrichtungen zur Benutzerkommunikation, Speichereinrichtungen und/oder Schnittstellen kommunizieren. Es kann sich also gleichermaßen um verschiedene Busse handeln, oder es können auch zwei oder mehr Kommunikationen über denselben Bus erfolgen. So kann beispielsweise die Bewegungssteuerung über einen echtzeitfähigen Feldbus mit den Antrieben eines Roboters oder einer Roboteranordnung kommunizieren. Über diesen Bus kann in einer Ausführung auch die Prozesssteuerung mit ihrer Peripherie und der Bewegungssteuerung kommunizieren, so dass sie Daten der Antriebe direkt erhält. Gleichermaßen kann die Kommunikation zwischen Bewegungssteuerung und Antrieben einerseits und Prozesssteuerung und Peripherie andererseits auch über getrennte Feldbusse erfolgen und die Prozesssteuerung Daten der Antriebe aus dem gemeinsamen Speicher entnehmen, in den ein Abbild des Feldbusses zwischen Bewegungssteuerung und Antrieben eingeblendet wird.

In einer bevorzugten Ausführung ist eine Sicherheitsüberwachung vorgesehen. Diese kann vorzugsweise in einer Virtuellen Maschine im Sinne der vorliegenden Umgebung, d.h. insbesondere einer, vorzugsweise programmtechnisch definierten, Instanz der Multikern-Architektur, vorgesehen sein. Dabei kann es sich insbesondere um die zweite Virtuelle Maschine handeln. Sofern diese wenigstens zwei Rechenkerne aufweist, können in einer bevorzugten Ausführung unterschiedliche Kerne der zweiten Virtuellen Maschine für die Bewegungssteuerung und für die Sicherheitsüberwachung vorgesehen sein. Gleichermaßen kann es bevorzugt sein, die redundante, vorzugsweise diversitäre Sicherheitsüberwachung auf zwei oder mehr Kerne und/oder zwei oder mehr Virtuelle Maschinen zu verteilen. Mit der Prozesssteuerung kommuniziert die Sicherheitsüberwachung vorzugsweise über einen virtuellen I/O-Treiber, dessen Datenbereich in einen gemeinsamen Speicher eingeblendet werden kann. Unter einer Sicherheitsüberwachung wird vorliegend insbesondere in fachüblicher Weise der Vergleich von Ist-Werten des Roboters bzw. der Roboteranordnung mit zulässigen Grenzwerten, eine Überwachung von Arbeits- und/oder Schutzräumen, Zugängen und dergleichen verstanden.

Eine Prozessapplikation im Sinne der vorliegenden Erfindung kann insbesondere eine Trennapplikation sein, insbesondere ein Schneiden mit fester Schneide oder gleichermaßen ohne feste Schneide wie ein Wasserstrahl- oder Laserschneiden. Verallgemeinernd wird unter einem Trennen vorliegend auch eine spanende Bearbeitung, insbesondere ein Fräsen und/oder Sägen, verstanden. Eine Peripherie einer solchen Trennapplikation kann entsprechend insbesondere einen robotergeführten Schneid- oder Fräskopf mit Antrieben und vorzugsweise Sensoren, beispielsweise zur Abstands- oder Lagemessung, aufweisen.

Zusätzlich oder alternativ kann eine Prozessapplikation eine Fügeapplikation sein, insbesondere ein Kleben, Schweißen, Schrauben, Nieten und/oder Stecken. Eine Peripherie einer solchen Fügeapplikation kann entsprechend insbesondere eine robotergeführte Klebe- oder Nietpistole oder Schweißzange, einen robotergeführten Schrauber oder Greifer oder dergleichen mit Antrieben und vorzugsweise Sensoren aufweisen.

Weiter zusätzlich oder alternativ kann eine Prozessapplikation eine Oberflächenbearbeitungsapplikation, insbesondere ein Beschichten, vorzugsweise Lackieren, und/oder ein Polieren sein. Eine Peripherie einer solchen Oberflächenbearbeitungsapplikation kann entsprechend insbesondere eine robotergeführte Lackierpistole, eine robotergeführte Polierscheibe oder dergleichen mit Antrieben und vorzugsweise Sensoren aufweisen.

Weiter zusätzlich oder alternativ kann eine Prozessapplikation eine Transportapplikation sein, insbesondere ein Greifen. Dabei wird unter einem Greifen vorliegend verallgemeinernd insbesondere ein lösbares mechanisches, insbesondere form- und/oder reibschlüssiges, pneumatisches und/oder (elektro)magnetisches Fixieren eines Werkstückes an einem Roboter verstanden. Entsprechend kann eine Peripherie einer solchen Transportapplikation insbesondere einen mechanischen, (elektro)magnetischen und/oder Vakuumgreifer aufweisen.

Wie erwähnt, sind in einer bevorzugten Ausführung zwei oder mehr virtuelle Maschinen synchronisiert. Hierzu können eine oder mehrere Virtuelle Maschinen Synchronisations-Interrupts von einer anderen Virtuellen Maschine erhalten. Zusätzlich oder alternativ kann auch über eine absolute Systemzeituhr synchronisiert werden, mit der die zu synchronisierenden Virtuellen Maschinen kommunizieren.

Weitere Vorteile und Merkmale ergeben sich aus den Unteransprüchen und den Ausführungsbeispielen. Hierzu zeigt, teilweise schematisiert, die einzige:

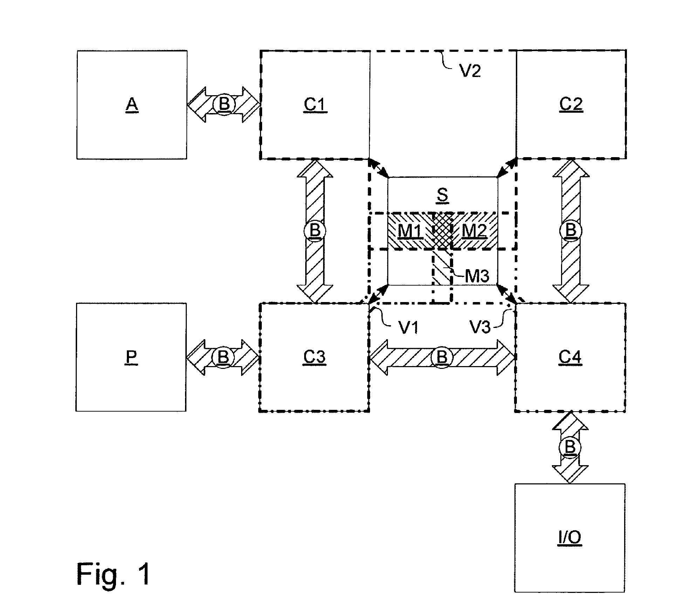

- Fig. 1:: eine Steuerung eines Roboters nach einer Ausführung der vorliegenden Erfindung.

Fig. 1 zeigt eine Steuerung eines Roboters mit einer (gemeinsam dargestellten) Mehrzahl von Antrieben A, die eine Multikern-Architektur mit vier separaten physikalischen Rechenkernen C1...C4 und einem physikalischen Speicher S aufweist, mit dem die Rechenkerne C1...C4, wie durch Doppelpfeile angedeutet, in üblicher Weise Daten austauschen.

Die Bewegungssteuerung für die Antriebe A ist in einer zweiten Virtuellen Maschine V2 implementiert, die - wie in Fig. 1 strichliert angedeutet - den Rechenkern C1, C2 sowie einen Teil des physikalischen Speichers S umfasst. Eine Sicherheitsüberwachung ist redundant auf dem ersten und zweiten Rechenkern C1, C2 der zweiten Virtuellen Maschine implementiert und überwacht den Roboter und seine Prozessapplikation, beispielsweise ein Schweißen, Lackieren oder Greifen mit einer Schweißzange, Lackierpistole bzw. einem Greifer, deren Aktuatoren und Sensoren, etwa Motoren, Elektroden und Kraftmesser der Schweißzange, Ventil, Druck- und Füllstandssensor der Lackierpistole bzw. elektromotorische und/oder - magnetische, hydraulische und/oder pneumatische Greiferantriebe in Fig. 1 gemeinsam als Peripherie P der Prozessapplikation dargestellt sind.

Diese Prozessapplikation wird durch eine Prozesssteuerung gesteuert. Diese ist in einer ersten Virtuellen Maschine V1 implementiert, die - wie in Fig. 1 strichpunktiert angedeutet, den dritten Rechenkern C3 sowie einen Teil des physikalischen Speichers S umfasst, der sich teilweise mit dem Teil überschneidet, der auch der zweiten Virtuellen Maschine zugeordnet ist. Dieser in Fig. 1 schraffierte Schnittbereich bildet einen gemeinsamen Speicher M1 der ersten und zweiten Virtuellen Maschine V1, V2.

Diese beiden Virtuellen Maschinen V1, V2 weisen unterschiedliche, jeweils echtzeitfähige Laufzeitumgebungen bzw. Betriebssysteme auf. So kann ein Prozesshersteller seine Prozesssteuerung auf einfache Weise in die Steuerung integrieren.

Auf dem vierten Rechenkern C4 ist eine, in Fig. 1 doppel-strichpunktiert angedeutete, dritte Virtuelle Maschine V3 mit einem nicht-echtzeitfähigen Windows-Betriebssystem insbesondere zur Benutzerkommunikation sowie Daten-, insbesondere Benutzerverwaltung implementiert. Die dritte Virtuelle Maschine V3 umfasst ebenfalls einen Teil des physikalischen Speichers S, der sich teilweise mit dem Teil überschneidet, der auch der zweiten Virtuellen Maschine V2 zugeordnet ist, teilweise mit dem Teil, der auch der ersten Virtuellen Maschine V1 zugeordnet ist, und teilweise mit dem Teil, der der ersten und zweiten Virtuellen Maschine V1, V2 zugeordnet ist. Diese Schnittbereiche bilden einen gemeinsamen Speicher M2 der zweiten und dritten Virtuellen Maschine V2, V3 (in Fig. 1 schraffiert), einen gemeinsamen Speicher M3 der ersten und dritten Virtuellen Maschine V1, V3 (in Fig. 1 schraffiert), bzw. einen allen drei Virtuellen Maschinen V1...V3 gemeinsamen Speicher M1∩ M2∩ M3 (kreuzschraffiert in Fig. 1).

In Fig. 1 ist schraffiert ein Virtueller Bus B angedeutet, über den die erste Virtuelle Maschine V1 zur Prozesssteuerung mit der Peripherie P der Prozessapplikation, die zweite Virtuelle Maschine V2 zur Bewegungssteuerung mit den Antrieben A des Roboters, und die dritte Virtuelle Maschine V3 mit einer Ein- und Ausgabeeinrichtung I/O, beispielsweise einer Tastatur, einem Bildschirm und/oder einem Handbediengerät, sowie die drei Virtuellen Maschinen V1...V3 miteinander kommunizieren, d.h. uni- oder bidirektional Daten austauschen. Gleichermaßen können auch separate Busse für die Kommunikation zwischen der ersten Virtuellen Maschine V1 und der Peripherie P, zwischen der zweiten Virtuellen Maschine V2 und den Antrieben A, zwischen der dritte Virtuellen Maschine V3 und der Ein- und Ausgabeeinrichtung I/O, zwischen der ersten und zweiten Virtuellen Maschine V1, V2, zwischen der ersten und dritten Virtuellen Maschine V1, V3 und/oder zwischen der zweiten und dritten Virtuellen Maschine V2, V3 vorgesehen sein. Ein oder mehrere Busse sind bevorzugt als EtherCAT-Bus ausgebildet.

Die drei Virtuellen Maschinen kommunizieren einerseits über den bzw. die Virtuellen Busse B, andererseits über die gemeinsamen Speicher M1...M3.

Beispielsweise kommuniziert die Prozesssteuerung mit der Windows-Applikation zur Benutzerkommunikation über das interne, multi-teilnehmerfähige virtuelle TCP/UDP/IP-Netzwerk B. Auf diese Weise kann zum Beispiel eine Prozesssteuerungsoberfläche auf dem Bildschirm und/oder dem Handbediengerät ausgegeben werden. Zusätzlich kann durch Routing über die zweite Virtuelle Maschine V2 mit der Laufzeitumgebung VxWorks (SMP) mit einem Engineering-System für die Prozesssteuerung kommuniziert werden.

Als Kommunikationsschnittstelle zur Bewegungssteuerung steht der gemeinsame Speicher M1 zur Verfügung. Die jeweilige Funktionalität dieser Speicher wird vom Bewegungssteuerungshersteller vorgegeben und die Prozesssteuerung kann darauf lesend und schreibend zugreifen. Da die Prozesssteuerung auf einem eigenen Rechenkern C3 abläuft, kann diese keine direkten Aufrufe in die Bewegungssteuerung oder die Windowsapplikation machen. Vielmehr müssen alle gewünschten Funktionalitäten, welche Aktionen in der Bewegungssteuerung auslösen sollen, auf gemeinsame Speicher abgebildet und auf der Bewegungssteuerungsseite entsprechend programmiert werden. Nach erfolgter Funktion kann die Bewegungssteuerung als Antwort eine Status- bzw. Fehlermeldung zurückliefern. Es empfiehlt sich, auf diese Antwort nicht aktiv auf der Stelle kreisend zu warten, sondern im Zyklus der Prozesssteuerung die Antwort auszuwerten.

Zur Kommunikation mit den Antrieben A einschließlich deren Sensoren, beispielsweise Winkelencodern oder dergleichen, stehen der Prozesssteuerung folgende Mechanismen zur Verfügung: Es können zyklisch Datenabbilder der Feldbusse zwischen Antrieben A und zweiter Virtueller Maschine V2 in den Adressraum der Prozesssteuerung im gemeinsamen Speicher M1 eingeblendet werden. Über diesen gemeinsamen Speicher M1 findet die Verwaltung der Zugriffe auf die Datenabbilder statt. Dort können Pointer und Spin Locks zur Verriegelung der Zugriffe abgelegt werden. Zusätzlich oder alternativ kann azyklisch über das virtuelle TCP/UDP/IP Netzwerk B kommuniziert werden, zum Beispiel mittels CoE ("CAN application layer over EtherCAT"). Hierfür kann bei EtherCAT das Remote API verwendet werden.

Zur Kommunikation mit der Bewegungssteuerung und/oder der Sicherheitsüberwachung steht ein virtueller I/O-Treiber zur Verfügung, dessen Datenbereich ebenfalls in den gemeinsamen Speicher eingeblendet wird. Die Verwaltung erfolgt ebenfalls über Pointer und Spin Locks zur Verriegelung.

Die Prozesssteuerung erhält über den gemeinsamen Speicher auch Zugriff auf globale Verwaltungsdaten der Bewegungssteuerung wie zum Beispiel die globale EtherCAT Systemuhrzeit und kann sich dadurch hochgenau mit der Bewegungssteuerung über die absolute Systemuhrzeit synchronisieren.

### Bezugszeichenliste

- A: Antriebe des Roboters
- B: virtueller Bus
- C1...C4: Rechnerkern
- I/O: Ein-/Ausgabeeinrichtung (Tastatur, Bildschirm, Bedienhandgerät)
- M1...M3: gemeinsamer Speicher
- P: Peripherie
- S: physikalischer Speicher
- V1...V3: Virtuelle Maschine

## Patentansprüche

1. Steuerung für wenigstens einen Roboter, mit einer, insbesondere symmetrischen, Multikern-Architektur, die eine erste Virtuelle Maschine (V1) mit wenigstens einem Rechenkern (C3) aufweist, wobei die erste Virtuelle Maschine (V1) zum Steuern wenigstens einer Prozessapplikation (P) eines Roboters vorgesehen ist.

2. Steuerung nach Anspruch 1, **dadurch gekennzeichnet, dass** die Multikern-Architektur eine zweite Virtuelle Maschine (V2) mit wenigstens einem weiteren Rechenkern (C1, C2) aufweist wobei die zweite Virtuelle Maschine (V2) zum Steuern von wenigstens einem Antrieb (A) eines Roboters vorgesehen ist.

3. Steuerung nach einem der vorhergehenden Ansprüche, **dadurch gekennzeichnet, dass** die Multikern-Architektur eine dritte Virtuelle Maschine (V3) mit wenigstens einem weiteren Rechenkern (C4) aufweist, die zur Benutzerkommunikation, Datenverarbeitung und/oder Datenverwaltung vorgesehen ist.

4. Steuerung nach einem der vorhergehenden Ansprüche, **dadurch gekennzeichnet, dass** wenigstens zwei Virtuelle Maschinen (V1...V3) einen gemeinsamen Speicher (M1...M3) aufweisen.

5. Steuerung nach einem der vorhergehenden Ansprüche, **gekennzeichnet durch** wenigstens einen Bus (B) zur Kommunikation einer Virtuellen Maschinen mit wenigstens einer weiteren Virtuellen Maschine, wenigstens einem Antrieb (A) wenigstens eines Roboters, wenigstens einer Peripherie (P) wenigstens einer Prozessapplikation, wenigstens einer Ein- und/oder Ausgabeeinrichtung (I/O) zur Benutzerkommunikation, wenigstens einer Schnittstelle und/oder wenigstens einer Speichereinrichtung.

6. Steuerung nach einem der vorhergehenden Ansprüche, **gekennzeichnet durch** eine Sicherheitsüberwachung.

7. Steuerung nach einem der vorhergehenden Ansprüche, **dadurch gekennzeichnet, dass** eine Prozessapplikation eine Trenn-, insbesondere Schneide-, Füge-, insbesondere Klebe-, Schweiß-, Schraub-, Niet- und/oder Steck-, Oberflächenbearbeitungs-, insbesondere Beschichtungs-, vorzugsweise Lackier-, und/oder Polier-, und/oder eine Transport-, insbesondere Greifapplikation umfasst.

8. Verfahren zum Steuern wenigstens eines Roboters mit einer Steuerung nach einem der vorhergehenden Ansprüche, wobei die erste Virtuelle Maschine (V1) wenigstens eine Prozessapplikation (P) dieses Roboters steuert.

9. Verfahren nach Anspruch 8, **dadurch gekennzeichnet, dass** die zweite Virtuelle Maschine (V2) wenigstens einen Antrieb (A) eines Roboters steuert.

10. Verfahren nach einem der vorhergehenden Ansprüche 8 bis 9, **dadurch gekennzeichnet, dass** eine Virtuelle Maschine mit wenigstens einer weiteren Virtuellen Maschinen, wenigstens einem Antrieb (A) wenigstens eines Roboters, wenigstens einer Peripherie (P) wenigstens einer Prozessapplikation, wenigstens einer Ein- und/oder Ausgabeeinrichtung (I/O) zur Benutzerkommunikation und/oder wenigstens einer Speichereinrichtung mittels eines gemeinsamen Speichers (M1...M3) und/oder über einen Bus (B) kommuniziert.

11. Verfahren nach einem der vorhergehenden Ansprüche 8 bis 10, **dadurch gekennzeichnet, dass** zwei virtuelle Maschinen (V2, V1) synchronisiert sind.

12. Verfahren nach einem der vorhergehenden Ansprüche 9 bis 11, **dadurch gekennzeichnet, dass** ein von der zweiten Virtuellen Maschine (V2) abzuarbeitendes Programm zum Steuern von wenigstens einem Antrieb (A) eines Roboters und ein von der ersten Virtuellen Maschine (V1) abzuarbeitendes Programm zum Steuern wenigstens einer Prozessapplikation (P) dieses Roboters gemeinsam oder getrennt, insbesondere in unterschiedlichen Laufzeitumgebungen, erstellt werden.
